# FASCICULE DE BREVET EUROPEEN

(11) **EP 3 217 649 B1**
(45) Date de publication et mention de la délivrance du brevet: **27.02.2019**
(21) Numéro de dépôt: 17158608.4
(22) Date de dépôt: 01.03.2017
(51) Int. Cl.: H04N 5/374

(54) **CAPTEUR D'IMAGES PAR DECALAGE TEMPOREL ET INTEGRATION ETENDUE**
BILDERFASSUNGSSENSOR MIT ERWEITERTER ZEITVERZÖGERUNG UND INTEGRATION
IMAGE SENSOR WITH EXTENDED TIME DELAY AND INTEGRATION

(30) Priorité: 11.03.2016 FR 1600405
(43) Date de publication de la demande: 13.09.2017
(73) Titulaire: Thales, 92400 Courbevoie (FR)
(72) Inventeur: PIGOUCHE, Olivier, 06130 Grasse (FR); RENARD, Christophe, 06150 Cannes La Bocca (FR); LEMASSON, Franck, 06150 Cannes La Bocca (FR); LECONTE, Patrick, 06150 Cannes La Bocca (FR); LEYRE, Xavier, 06150 Cannes La Bocca (FR)
(74) Mandataire: Priori, Enrico

(56) Documents cités:
- FR-A1- 2 893 140
- FR-A1- 2 976 754
- US-A1- 2012 127 331

## Description

L'invention porte sur un capteur d'images du type dit « par décalage temporel et intégration » (TDI, de l'anglais « Time Delay and Intégration »). Un tel capteur est adapté pour être embarqué dans un porteur (satellite ou aéronef) se déplaçant au dessus d'une scène à observer ; il convient particulièrement pour des applications spatiales.

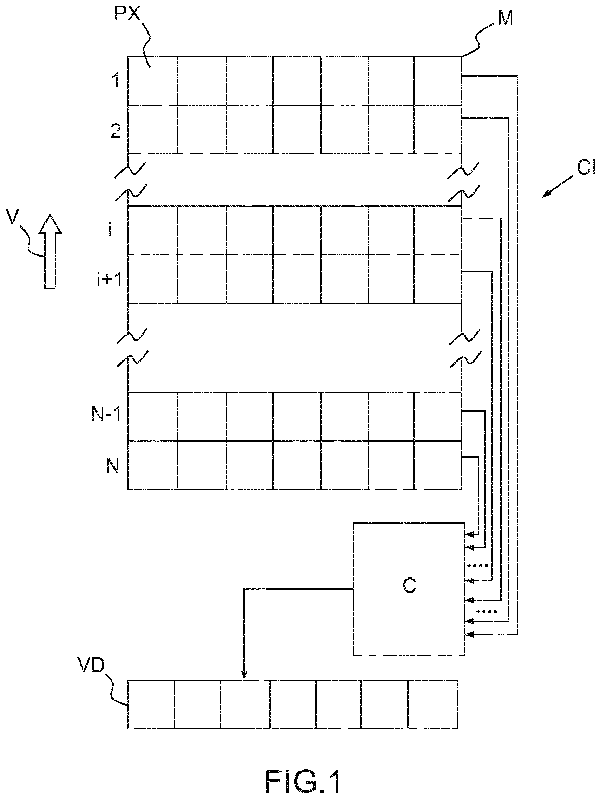

Le principe d'un capteur d'images TDI est illustré sur la figure 1. Le capteur CI comprend une matrice M de pixels PX, agencés par lignes (ou rangées) et par colonnes ; sur la figure, les lignes sont numérotées de 1 à N. Le porteur dans lequel il est embarqué se déplace avec une vitesse V dans la direction D, perpendiculaire aux lignes ; par conséquent l'image de la scène observée, formée sur la matrice par un système optique non représenté, défile dans la même direction, avec l'orientation opposée à V. Ainsi, la ligne de pixels de rang i+1 voit, à un instant tᵢ₊₁, la même distribution d'intensité lumineuse vue par la ligne d'ordre i à un instant précédent tᵢ=tᵢ₊₁-δt, correspondant à une même ligne d'une image optique de la scène observée. L'intervalle δt dépend à la fois de la résolution spatiale recherchée (fonction du grossissement du système optique et de la taille des pixels) et de la vitesse de déplacement V du porteur par rapport au sol. Un circuit électronique C intègre les signaux générés par les différentes lignes de pixels de la matrice et correspondant à une même ligne de l'image. En d'autres termes il additionne les signaux générés par les pixels de la ligne de rang 1 à l'instant t₁, ceux de la ligne de range 2 à l'instant t₂, ... et ceux de la ligne de rang N à l'instant t_{N}. A sa sortie, le circuit C fournit un vecteur de données d'images VD représentatif de ladite ligne de l'image optique, intégrée sur un temps égal à N·δt, ce qui permet d'augmenter le rapport signal sur bruit des données d'image acquises par le capteur.

Du point de vue du rapport signal sur bruit, il est donc avantageux d'effectuer l'intégration sur un nombre N de lignes aussi élevé que possible. Il y a cependant des limites à cela. En effet, il y a inévitablement des imperfections entre le profil théorique de pointage du système optique formateur d'image et le profil réel, et cela pour des multiples raisons : instabilité de l'attitude du porteur, micro-vibrations, distorsion optique, etc. A cela peut s'ajouter un alignement imparfait de la matrice. Ces imperfections se cumulent d'une ligne à l'autre, jusqu'à conduire à un flouté inacceptable de l'image finale. En pratique, donc, le nombre de lignes sur lesquelles il est possible d'effectuer l'intégration ne dépasse pas quelques dizaines, par exemple de l'ordre de 40 dans des applications spatiales.

Le document FR 2 976 754 enseigne une technique permettant de surmonter en partie cette limitation. Ce document divulgue un capteur comprenant une pluralité de matrices de détection d'images de type TDI, alignées dans la direction de défilement de l'image, et un capteur optique de mouvement (ou « détecteur de bougé ») constitué de pixels de forme allongée, orientés selon deux directions mutuellement orthogonales. Chacune des m>1 matrices de détection individuelles effectue une intégration TDI sur N lignes, le nombre N étant suffisamment petit pour que le cumul des imperfections reste tolérable. Pour chaque ligne de l'image optique de la scène observée, on obtient ainsi m vecteurs de données d'image (on entend par « donnée d'image » une valeur numérique représentant l'intensité lumineuse associée à un pixel) correspondant chacun à une intégration sur N lignes. Le capteur optique de mouvement permet d'associer un « bougé » (décalage) à chacun de ces vecteurs ; un circuit électronique de traitement corrige ce bougé et somme les vecteurs associés à une même ligne de l'image optique. Ainsi, on peut réaliser une intégration sur mxN lignes, alors même que les effets préjudiciables du bougé ne se cumulent que sur N lignes.

Cette approche présente néanmoins des inconvénients importants.

Premièrement, elle ne permet de corriger que le bougé résultant d'un changement d'attitude ou d'une autre irrégularité dans le déplacement du porteur, ou encore d'une vibration, mais pas les décalages dus aux distorsions optiques ou aux défauts d'alignement.

Deuxièmement, elle ne peut pas - ou difficilement - être mise en oeuvre en utilisant des composants standards, disponibles dans le commerce (« COTS », de l'anglais « commercial off-the-shelf », c'est-à-dire « pris sur étagère »). En effet, d'une part les détecteurs de bougé ne sont pas des composants standards, d'autre part l'exigence d'un alignement sensiblement parfait entre ces capteurs et les matrices de détections d'image, et entre ces dernières, rend pratiquement nécessaire une co-intégration monolithique.

Le document FR-A-2893140 divulgue un capteur de vitesse au sol d'un véhicule utilisant un capteur d'image matriciel et des moyens de corrélation de l'image projetée sur une ligne de référence avec les lignes de la matrice.

L'invention vise à surmonter ces inconvénients de l'art antérieur, et plus particulièrement à procurer un capteur d'images de type TDI permettant d'effectuer une intégration sur un nombre important de lignes tout en pouvant être réalisé facilement à partir de composants standards.

Conformément à l'invention, ce but est atteint grâce à une détection du bougé réalisée directement à partir des données d'image acquises par une pluralité de matrices de détection TDI alignées dans la direction de défilement de l'image optique, par un calcul de corrélation croisée. Cette détection « intrinsèque » évite la nécessité de prévoir des capteurs ad hoc, non conventionnels et nécessitant d'un alignement extrêmement précis. En outre, le caractère intrinsèque de la détection du bougé la rend aussi sensible aux effets des distorsions optiques et des erreurs d'alignement. A son tour, cela permet de se passer d'une co-intégration des matrices de détection TDI ; il est donc possible de réaliser le détecteur par un simple assemblage de matrices TDI du commerce, complétées par un circuit de traitement de signaux pouvant être réalisé à partir d'un circuit numérique programmable tel qu'un FPGA (acronyme anglais de « Field Programmable Gate Array », c'est-à-dire réseau de portes programmable *in situ*).

Un objet de l'invention est donc un capteur d'images destiné à être embarqué dans un porteur se déplaçant au-dessus d'une scène à observer, ledit capteur comprenant :
- une pluralité de matrices de détection d'images par décalage temporel et intégration, alignées selon la direction de déplacement dudit porteur ; et
- un circuit de traitement de signaux ayant au moins une entrée reliée à des sorties de données desdites matrices de détection d'images ;
dans lequel chaque matrice de détection d'images comprend une pluralité de lignes de pixels photosensibles parallèles entre elles et perpendiculaires à la direction de déplacement dudit porteur et est configurée pour fournir à sa sortie des vecteurs de données d'image obtenus par accumulation de données d'image générées par lesdites lignes de pixels et correspondant à une même région de ladite scène, observée à des instants différents au cours du déplacement dudit porteur ;
caractérisé en ce que ledit circuit de traitement de signaux est configuré pour :
- calculer des corrélations croisées entre des vecteurs de données d'image fournis par les différentes matrices de détection d'images ;
- en déduire un décalage entre lesdits vecteurs de données d'images ;
- corriger ledit décalage en recalant lesdits vecteurs de données d'image ; et
- intégrer les vecteurs de données d'image recalés pour fournir à sa sortie des vecteurs de données d'image accumulés.

Selon des modes de réalisation particuliers de l'invention :
- Le capteur d'image peut comprendre également des mémoires tampons configurées pour stoker, pour chaque dite matrice de détection d'image, une matrice de données d'image formée par une pluralité de vecteurs de données d'image correspondant à des instants d'acquisition successifs.
- Ledit circuit de traitement de signaux peut être configuré pour : calculer des corrélations croisées bidimensionnelles entre les matrices de données d'image stockées dans lesdites mémoires tampons ; en déduire un décalage bidimensionnel entre lesdites matrices de données d'images ; corriger ledit décalage en recalant en deux dimensions lesdites matrices de données d'image ; et intégrer les vecteurs de données d'image recalés pour fournir à sa sortie des matrices de données d'image accumulées.

- Chaque dite matrice de détection d'images peut être réalisée sous la forme d'un circuit intégré distinct.
- Le capteur d'images peut comprendre deux matrices de détection d'images, réalisées sous la forme de circuits intégrés distincts, agencés tête-bêche.
- Ledit circuit de traitement des signaux peut être configuré pour calculer une corrélation croisée entre les vecteurs de données d'image fournis par chaque paire de matrices de détection d'images adjacentes.
- Ledit circuit de traitement des signaux peut également être configuré pour effectuer une correction radiométrique des vecteurs de données d'image fournis par les différentes matrices de détection d'images avant de calculer leurs corrélations croisées.
- Ledit circuit de traitement des signaux peut être réalisé sous la forme d'un circuit numérique programmable.
- L'écartement, dans ladite direction de déplacement dudit porteur, entre deux matrices de détection d'images adjacentes peut être inférieur ou égal à 5000 fois, et de préférence à 3000 fois, la largeur d'un pixel desdites matrices.

Un autre objet de l'invention est un instrument optique spatial ou aéroporté d'acquisition d'images, comprenant un tel capteur d'images.

D'autres caractéristiques, détails et avantages de l'invention ressortiront à la lecture de la description faite en référence aux dessins annexés donnés à titre d'exemple et qui représentent, respectivement :
- La figure 1, déjà décrite, le schéma fonctionnel d'un capteur d'images TDI connu de l'art antérieur ;
- La figure 2A, le schéma d'un capteur d'images TDI selon un premier mode de réalisation de l'invention ;
- La figure 2B, le schéma d'un capteur d'images TDI selon un second mode de réalisation de l'invention ; et
- La figure 3, une représentation très schématique d'un vaisseau spatial portant un instrument optique d'acquisition d'images équipé d'un capteur d'images TDI selon un mode de réalisation de l'invention.

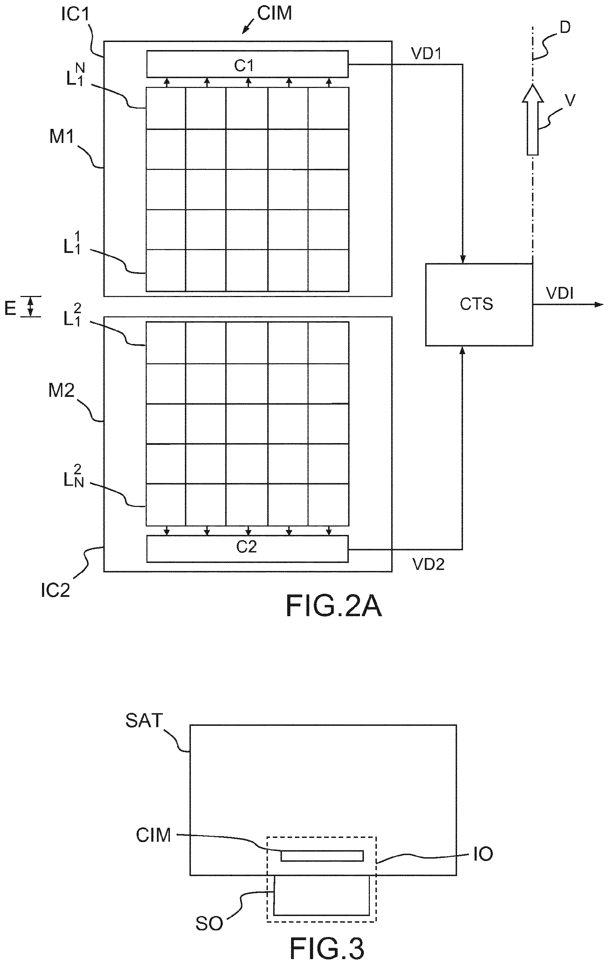

La figure 2A illustre un capteur d'images CIM selon un premier mode de réalisation de l'invention. Ce capteur comprend deux matrices de détection de type CTI, identifiées par les références M1 et M2, et un circuit de traitement des signaux CTS présentant deux ports d'entrée reliés à des ports de sortie respectifs desdites matrices de détection. Chacune des matrices de détection, M1, M2, constituée par un circuit intégré monolithique respectif IC1, IC2, comprend une partie sensible, formée par des lignes L¹₁ - L¹_{N}, L²₁ - L²_{N} de M pixels photosensibles parallèles entre elles et avec les lignes de l'autre matrice, et un circuit de traitement C1, C2 dont le fonctionnement a été décrit plus haut en référence à la figure 1. Sur la figure, les deux matrices M1 et M2 comprennent 5x5 pixels, mais en réalité le nombre de lignes est généralement de quelques dizaines (par exemple, N=40), tandis que le nombre de colonnes est beaucoup plus élevé pouvant atteindre plusieurs centaines, voire des milliers. Les matrices M1, M2 peuvent par exemple être réalisée en technologie CCD (dispositifs à transfert de charge, de l'anglais « Charge-Coupled Device) ou CMOS.

Les deux matrices sont alignées dans une direction D, perpendiculaire à l'orientation des lignes et coïncidant avec la direction de déplacement d'un porteur dans lequel le capteur est embarqué ; la flèche V indique le sens de ce déplacement. Comme cela a été expliqué plus haut, une image optique formée par un système optique embarqué défile sur le capteur dans la direction D, avec un sens opposé à celui du déplacement du porteur. Ainsi une ligne de l'image optique éclaire d'abord la ligne de pixels L¹_{N} de la matrice M1, puis sa ligne L¹_{N-1} et ainsi de suite jusqu'à la ligne L¹₁, puis l'espacement E entre les régions actives des deux matrices, ensuite la ligne L²₁ de la matrice M2, puis sa ligne L²₂ et ainsi de suite jusqu'à la ligne L²_{N}. On remarque que les deux matrices de détection sont agencées « tête-bêche », avec leurs portions actives en regard, de façon à minimiser la largeur de l'espacement E. Une conséquence de cela est que l'image optique défile sur la matrice M1 dans un sens opposé à celui de la numérotation de ses lignes ; le circuit de traitement C1 de cette matrice doit donc opérer « en mode arrière », en intégrant les signaux des différentes lignes dans l'ordre inverse, tandis que le circuit de traitement C2 de la matrice M2 opère « en mode avant », comme le circuit C de la figure 1. Cette capacité à intégrer soit en mode avant, soit en mode arrière, est native dans le cas des capteurs CMOS du commerce.

Le circuit de traitement C1 de la matrice M1 produit à sa sortie une suite de vecteurs de données VD1 représentatifs de lignes respectives de l'image optique, intégrée sur un temps égal à N·δt, où N est le nombre de lignes de la matrice et δt est le temps d'intégration de l'image sur chaque ligne. De même, le circuit de traitement C1 de la matrice M2 produit à sa sortie une suite de vecteurs de données VD2 représentatifs de lignes respectives de l'image optique, intégrée sur un temps égal à N·δt. Dans les deux cas, un vecteur de données est générés à chaque pas d'intégration δt. Généralement, les vecteurs de donnes VD1, VD2 se présentent sous la forme de signaux électroniques numériques, la conversion analogique-numérique étant réalisée à l'intérieur des matrices, et notamment de leurs circuits de traitement C1, C2. Alternativement, les vecteurs VD1, VD2 pourraient avoir une nature analogique, une conversion au format numérique étant alors réalisée par le circuit de traitement de signaux CTS.

Le circuit de traitement de signaux CTS reçoit à ses entrées les vecteurs VD1 et VD2, et s'en sert pour calculer un vecteur de données d'image VDI (généralement sous la forme d'un signal électronique numérique) correspondant à un temps d'intégration doublé, c'est-à-dire égal à 2·N·δt. Pour ce faire, cependant, il doit d'abord détecter le décalage entre VD1 et VD2 provoqué, puis les corriger en recalant les vecteurs, enfin les additionner pour obtenir le vecteur de données d'image accumulé VDI.

Le décalage entre les vecteurs VD1, VD2 est provoqué par les fluctuations de la direction de pointage pendant le temps d'intégration, mais également par d'éventuelles erreurs d'alignement des deux matrices entre elles et/ou avec la direction D, voire par des distorsions optiques. Contrairement au cas du document FR 2 976 754, ce décalage n'est pas détecté grâce à des capteurs de bougé dédiés, mais directement à partir des vecteurs VD1, VD2 eux-mêmes; on peut parler de détection de bougé intrinsèque. Comme cela a été évoqué plus haut, cette approche présente un certain nombre d'avantages : premièrement, elle évite l'utilisation de capteurs additionnels et non-standard qui auraient un impact sur le coût du capteur d'images CIM ; deuxièmement, elle permet la détection des décalages dus à un alignement imparfait des matrices de détection et aux distorsions optiques. A son tour, cela permet de relâcher les contraintes de fabrication, et plus particulièrement d'utiliser des matrices de détection réalisées sous la forme de circuits intégrés distincts.

Conformément à l'invention, la détection intrinsèque du bougé est réalisée en calculant une corrélation croisée entre les vecteurs de données d'image VD1 et VD2. D'une manière connue en soi, la corrélation croisée entre deux vecteurs de données de M éléments numérotés de 1 à M est un vecteur contenant (2M-1) éléments numérotés de -(M-1) à +(M-1). Le décalage entre les vecteurs VD1 et VD2 est donné par l'indice de l'élément de ce vecteur correspondant au maximum de la corrélation croisée (M pouvant être grand, tandis que les décalages sont généralement assez petits, il peut être opportun de ne calculer la corrélation que pour un nombre limité de décalages autour de zéro). De cette façon, on trouve un décalage qui correspond nécessairement à un nombre entier de pixels. Pour effectuer une correction plus fine, il est possible de sur-échantillonner les vecteurs VD1, VD2, effectuer la détection et la correction du bougé à partir des vecteurs sur-échantillonnés, les additionner, puis sous-échantillonner le vecteur ainsi obtenu pour revenir à une taille de N pixels par ligne.

Avantageusement, une correction radiométrique des vecteurs VD1, VD2 est effectuée avant de procéder à la détection et à la correction du bougé afin de corriger la dispersion des gains et des courants d'obscurité des capteurs TDI M1 et M2.

Le circuit de traitement de signaux CTS est de préférence réalisé à partir d'un composant logique programmable tel un FPGA, mais il peut également s'agir d'un processeur programmé de manière opportune. Il est de préférence embarqué sur le même porteur que les matrices de détection ; il serait également envisageable de transmettre les vecteurs VD1, VD2 au sol et y effectuer les traitements, mais cette solution est moins avantageuse car elle induit une augmentation du flux de données à transmettre.

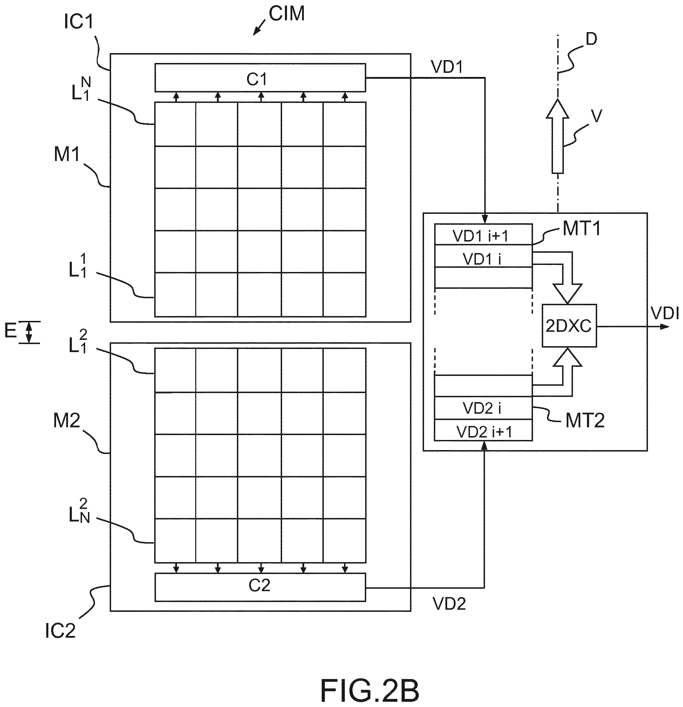

Le mode de réalisation décrit ci-dessus ne permet de détecter que les décalages perpendiculaires à la direction D de déplacement du porteur. Un mode de réalisation alternatif, illustré schématiquement sur la figure 2B, permet de surmonter cette limitation et de détecter des décalages en deux dimensions afin de mieux corriger les effets indésirables des perturbations d'attitude du porteur. Pour ce faire, il est nécessaire de prévoir, pour chaque matrice de détection d'images M1, M2, une mémoire tampon MT1, MT2 permettant de stocker une pluralité de vecteurs de données d'images VD1ᵢ, VD1ᵢ₊₁,...VD2 ᵢ, VD2ᵢ₊₁,...fournis par les circuits de traitement respectifs C1, C2 à des instants d'acquisition successifs. Ces mémoires tampons fonctionnent comme des régistres à décalage : à chaque pas d'intégration, le vecteur de données le plus ancien est effacé, les autres vecteurs de données se déplacent d'une unité de mémoire et un nouveau vecteur de données est stocké. Le contenu de chaque mémoire tampon représente une matrice, dont les lignes sont les vecteurs de données d'images. Une corrélation croisée bidimensionnelle (bloc 2DXC dans le circuit de traitement de signaux CTS de la figure 2B) permet de trouver le décalage, et donc le bougé en deux dimensions, entre deux matrices de données d'images acquises par des capteurs distincts. Les matrices sont ensuite recalées et intégrées, comme on le fait pour les vecteurs dans le premier mode de réalisation. Le résultat est une matrice de données d'images accumulée, dont les lignes sont des vecteurs VDI. Bien entendu, cela entraine une augmentation de la puissance de calcul nécessaire, mais chaque mémoire tampon peut ne stocker qu'un petit nombre de vecteurs de données d'images (typiquement trois ou quatre, généralement pas plus de 10), ce qui permet de maintenir la complexité des calculs à un niveau acceptable.

Les mémoires tampons peuvent être intégrées au circuit de traitement de signaux CTS, comme dans le cas illustré sur la figure 2B, mais cela n'est pas essentiel ; il peut également s'agir de composants distincts. En principe, les mémoires tampons peuvent même être intégrées aux circuits de traitement C1, C2 associés aux matrices de détection, mais cela nécessite alors l'utilisation de composants non-standard.

Même dans le cas où on ne s'intéresse qu'au décalage dans une seule direction, il peut être opportun d'utiliser les mémoires tampons MT1, MT2 et de calculer les corrélations croisées (monodimensionnelles) pour une pluralité de vecteurs d'images à la fois.

La figure 3 illustre très schématiquement un porteur SAT (par exemple un vaisseau spatial, et plus particulièrement un satellite) équipé d'un instrument optique d'acquisition d'images comprenant un système optique conventionnel SO, par exemple un télescope, couplé à un capteur d'images CIM selon un mode de réalisation de l'invention.

L'invention a été décrite en référence des modes de réalisation particuliers, utilisant deux matrices de détection TDI identiques, avec un même nombre de lignes et de colonnes, de forme carrée (N=M) et agencées tête-bêche. La portée de l'invention est cependant beaucoup plus générale. Premièrement, chaque matrice aura en général un nombre de colonnes (M) différent du nombre de lignes (N). Deuxièmement, le nombre de lignes et de colonnes peut ne pas être le même d'une matrice à l'autre. Même dans le cas où le nombre de matrices est égal à deux, l'agencement tête-bêche n'est pas essentiel : il est seulement avantageux afin de réduire l'écartement E entre les parties actives des matrices, et donc l'amplitude du décalage à corriger ; de préférence cet écartement ne devrait pas dépasser 3.000 voire 5.000 fois la taille d'un pixel.

Par ailleurs, le nombre de matrices de détection peut être supérieur à deux. Dans ce cas, on pourra procéder de la manière suivante :
- une matrice de détection, de préférence située en position centrale, sera choisie comme matrice de référence ;
- la méthode décrite plus haut sera appliquée pour déterminer les décalages entre chaque paire de matrices de détection adjacentes ;
- une addition de décalages successifs permettra de calculer le décalage des différents vecteurs (ou matrices) de données d'images par rapport au vecteur (ou à la matrice) issu(e) de la matrice de détection de référence ;
- les vecteurs (ou matrices) recalé(e)s seront intégrés pour fournir un vecteur VDI unique, ou une matrice de tels vecteurs.

## Revendications

1. Capteur d'images destiné à être embarqué dans un porteur (SAT) se déplaçant au-dessus d'une scène à observer, ledit capteur comprenant :
- une pluralité de matrices de détection d'images par décalage temporel et intégration (M1, M2), alignées selon la direction de déplacement (D) dudit porteur ; et
- un circuit de traitement de signaux (CTS) ayant au moins une entrée reliée à des sorties de données desdites matrices de détection d'images ;
dans lequel chaque matrice de détection d'images comprend une pluralité de lignes (L¹₁ - L¹_{N} ; L²₁ - L²_{N}) de pixels photosensibles parallèles entre elles et perpendiculaires à la direction de déplacement dudit porteur et est configurée pour fournir à sa sortie des vecteurs de données d'image (VD1, VD2) obtenus par accumulation de données d'image générées par lesdites lignes de pixels et correspondant à une même région de ladite scène, observée à des instants différents au cours du déplacement dudit porteur ;
**caractérisé en ce que** ledit circuit de traitement de signaux est configuré pour :
- calculer des corrélations croisées entre des vecteurs de données d'image (VD1, VD2) fournis par les différentes matrices de détection d'images ;
- en déduire un décalage entre lesdits vecteurs de données d'images ;
- corriger ledit décalage en recalant lesdits vecteurs de données d'image ; et
- intégrer les vecteurs de données d'image recalés pour fournir à sa sortie des vecteurs de données d'image accumulés (VDI).

2. Capteur d'images selon la revendication 1 comprenant également des mémoires tampons (MT1, MT2) configurées pour stoker, pour chaque dite matrice de détection d'image, une matrice de données d'image formée par une pluralité de vecteurs de données d'image (VD1ᵢ, VD1ᵢ₊₁, VD2ᵢ, VD2ᵢ₊₁) correspondant à des instants d'acquisition successifs.

3. Capteur d'images selon la revendication 2 dans lequel ledit circuit de traitement de signaux est configuré pour :
- calculer des corrélations croisées bidimensionnelles entre les matrices de données d'image stockées dans lesdites mémoires tampons ;
- en déduire un décalage bidimensionnel entre lesdites matrices de données d'images ;
- corriger ledit décalage en recalant en deux dimensions lesdites matrices de données d'image ; et
- intégrer les vecteurs de données d'image recalés pour fournir à sa sortie des matrices de données d'image accumulées.

4. Capteur d'images selon l'une des revendications précédentes dans lequel chaque dite matrice de détection d'images est réalisée sous la forme d'un circuit intégré distinct (IC1, IC2).

5. Capteur d'images selon la revendication 4 comprenant deux matrices de détection d'images, réalisées sous la forme de circuits intégrés distincts, agencés tête-bêche.

6. Capteur d'images selon l'une des revendications précédentes dans lequel ledit circuit de traitement des signaux est configuré pour calculer une corrélation croisée entre les vecteurs de données d'image fournis par chaque paire de matrices de détection d'images adjacentes.

7. Capteur d'images selon l'une des revendications précédentes dans lequel ledit circuit de traitement des signaux est également configuré pour effectuer une correction radiométrique des vecteurs de données d'image fournis par les différentes matrices de détection d'images avant de calculer leurs corrélations croisées.

8. Capteur d'images selon l'une des revendications précédentes dans lequel ledit circuit de traitement des signaux est réalisé sous la forme d'un circuit numérique programmable.

9. Capteur d'images selon l'une des revendications précédentes dans lequel l'écartement (E), dans ladite direction de déplacement dudit porteur, entre deux matrices de détection d'images adjacentes est inférieur ou égal à 5000 fois, et de préférence à 3000 fois, la largeur d'un pixel desdites matrices.

10. Instrument optique spatial ou aéroporté d'acquisition d'images (IO), comprenant un capteur d'images (CIM) selon l'une des revendications précédentes.

## Patentansprüche

1. Bilderfassungssensor, welcher dazu bestimmt ist, an Bord eines Trägers (SAT) mitgeführt zu werden, welcher sich oberhalb einer zu beobachtenden Szene bewegt, wobei der Sensor Folgendes beinhaltet:
- eine Vielzahl von Bilderkennungsmatrizen durch zeitliche Verschiebung und Integration (M1, M2), welche entlang der Bewegungsrichtung (D) des Trägers ausgefluchtet sind; und
- einen Signalbearbeitungsschaltkreis (CTS), welcher mindestens einen Eingang besitzt, welcher mit Datenausgängen der Bilderkennungsmatrizen verbunden ist;
wobei jede Bilderkennungsmatrix eine Vielzahl von lichtempfindlichen Pixelzeilen (L¹₁ - L¹_{N} ; L²₁ - 1²_{N}) besitzt, welche parallel zueinander und rechtwinklig zur Bewegungsrichtung des Trägers sind, und konfiguriert ist, um an ihrem Ausgang Bilddatenvektoren (VD1, VD2) bereitzustellen, welche durch Ansammlung von Bilddaten erzielt werden, welche durch die Pixelzeilen erzeugt werden, und welche einer gleichen Region der Szene entsprechen, welche zu unterschiedlichen Zeitpunkten im Verlauf der Bewegung des Trägers beobachtet wird;
**dadurch gekennzeichnet, dass** der Signalbearbeitungsschaltkreis für folgende Schritte konfiguriert ist:
- Berechnen der Kreuzkorrelationen zwischen Bilddatenvektoren (VD1, VD2), welche von den unterschiedlichen Bilderkennungsmatrizen bereitgestellt werden;
- hieraus Ableiten einer Verschiebung zwischen den Bilddatenvektoren;
- Korrigieren der Verschiebung durch Neukalibrieren der Bilddatenvektoren; und
- Integrieren der neukalibrierten Bilddatenvektoren zum Bereitstellen von angesammelten Bilddaten (VDI) an seinem Ausgang.

2. Bilderfassungssensor nach Anspruch 1, ebenfalls beinhaltend Pufferspeicher (MT1, MT2), welche konfiguriert sind zum Speichern, für jede solche Bilderkennungsmatrix, einer Bilddatenmatrix, welche durch eine Vielzahl von Bilddatenvektoren (VD1_{i,} VD1ᵢ₊₁, VD2ᵢ, VD2ᵢ₊₁) gebildet wird, welche unterschiedlichen Erfassungszeitpunkten entsprechen.

3. Bilderfassungssensor nach Anspruch 2, bei welchem der Signalbearbeitungsschaltkreis für folgende Schritte konfiguriert ist:
- Berechnen von bidimensionalen Kreuzkorrelationen zwischen den Bilddatenmatrizen, welche in den Pufferspeichern gespeichert sind;
- hieraus Ableiten einer bidimensionalen Verschiebung zwischen den Bilddatenmatrizen;
- Korrigieren der Verschiebung durch Neukalibrieren der Bilddatenmatrizen in zwei Dimensionen; und
- Integrieren der neukalibrierten Bilddatenvektoren zum Bereitstellen von angesammelten Bilddatenmatrizen an seinem Ausgang.

4. Bilderfassungssensor nach einem der vorhergehenden Ansprüche, bei welchem jede solche Bilderkennungsmatrix in der Form einer separaten integrierten Schaltung (IC1, IC2) geschaffen ist.

5. Bilderfassungssensor nach Anspruch 4, beinhaltend zwei Bilderkennungsmatrizen, welche in der Form separater, integrierter Schaltungen geschaffen sind, welche im Zickzack angeordnet sind.

6. Bilderfassungssensor nach einem der vorhergehenden Ansprüche, bei welchem der Signalbearbeitungsschaltkreis zum Berechnen einer Kreuzkorrelation zwischen den Bilddatenvektoren, welche durch jedes Paar von benachbarten Bilderkennungsmatrizen bereitgestellt werden, konfiguriert ist.

7. Bilderfassungssensor nach einem der vorhergehenden Ansprüche, bei welchem der Signalbearbeitungsschaltkreis ebenfalls zur Vornahme einer radiometrischen Korrektur der Bilddatenvektoren, welche durch die unterschiedlichen Bilderkennungsmatrizen bereitgestellt werden, vor dem Berechnen ihrer Kreuzkorrelationen konfiguriert ist.

8. Bilderfassungssensor nach einem der vorhergehenden Ansprüche, bei welchem der Signalbearbeitungsschaltkreis in der Form eines programmierbaren Digitalschaltkreises geschaffen ist.

9. Bilderfassungssensor nach einem der vorhergehenden Ansprüche, bei welchem der Abstand (E) in der Bewegungsrichtung des Trägers zwischen zwei benachbarten Bilderkennungsmatrizen kleiner als das oder gleich dem 5000-Fachen und vorzugsweise kleiner als das oder gleich dem 3000-Fachen der Breite eines Pixels der Matrizen ist.

10. Optisches Raumfahrt- oder Luftfahrtinstrument zur Erfassung von Bildern (IO), welches einen Bilderfassungssensor (CIM) nach einem der vorhergehenden Ansprüche beinhaltet.

## Claims

1. An image sensor intended to be placed on board a carrier (SAT) moving above a scene to be observed, said sensor comprising:
- a plurality of time shift and integration image detection matrices (M1, M2) aligned according to the direction (D) of movement of said carrier; and
- a signal processing circuit (CTS) having at least one input connected to data outputs of said image detection matrices;
wherein each image detection matrix comprises a plurality of rows (L¹₁ - L¹_{N}; L²₁ - L²_{N}) of light sensitive pixels, which are parallel to each other and are perpendicular to the direction of movement of said carrier, and is configured to supply image data vectors (VD1, VD2) at its output that are obtained by gathering image data that is generated by said rows of pixels and corresponds to the same region of said scene, observed at different instants during the movement of said carrier;
**characterised in that** said signal processing circuit is configured to:
- compute cross-correlations between image data vectors (VD1, VD2) supplied by the various image detection matrices;
- deduce therefrom a shift between said image data vectors;
- correct said shift by recalibrating said image data vectors; and
- integrate the recalibrated image data vectors to supply gathered image data vectors (VDI) at its output.

2. The image sensor as claimed in claim 1, further comprising buffer memories (MT1, MT2) configured to store, for each of said image detection matrices, an image data matrix formed by a plurality of image data vectors (VD1ᵢ, VD1ᵢ₊₁, VD2ᵢ, VD2ᵢ₊₁) corresponding to successive acquisition instants.

3. The image sensor as claimed in claim 2, wherein said signal processing circuit is configured to:
- compute two-dimensional cross-correlations between the image data matrices stored in said buffer memories;
- deduce therefrom a two-dimensional shift between said image data matrices;
- correct said shift by two-dimensionally recalibrating said image data matrices; and
- integrate the recalibrated image data vectors to supply gathered image data matrices at its output.

4. The image sensor as claimed in any one of the preceding claims, wherein each of said image detection matrices is produced in the form of a distinct integrated circuit (IC1, IC2).

5. The image sensor as claimed in claim 4, comprising two image detection matrices, produced in the form of distinct integrated circuits arranged head-to-foot.

6. The image sensor as claimed in any one of the preceding claims, wherein said signal processing circuit is configured to compute a cross-correlation between the image data vectors supplied by each pair of adjacent image detection matrices.

7. The image sensor as claimed in any one of the preceding claims, wherein said signal processing circuit is also configured to perform a radiometric correction of the image data vectors supplied by the various image detection matrices before computing the cross-correlations thereof.

8. The image sensor as claimed in any one of the preceding claims, wherein said signal processing circuit is produced in the form of a programmable digital circuit.

9. The image sensor as claimed in any one of the preceding claims, wherein the gap (E), in said direction of movement of said carrier, between two adjacent image detection matrices is less than or equal to 5,000 times, and preferably to 3,000 times, the width of one pixel of said matrices.

10. A space or airborne optical image acquisition instrument (IO), comprising an image sensor (CIM) as claimed in any one of the preceding claims.
